# EUROPEAN PATENT APPLICATION

(11) **EP 4 287 369 A1**
(43) Date of publication of application: **06.12.2023**
(21) Application number: 21921872.4
(22) Date of filing: 29.01.2021
(51) Int. Cl.: H01M 50/186, H01M 50/193, H01M 50/198

(54) **BATTERY PACK, ELECTRICAL DEVICE, AND METHOD FOR ASSEMBLING BATTERY PACK**

(71) Applicant: DONGGUAN POWERAMP TECHNOLOGY LIMITED, Dongguan, Guangdong 523000 (CN)
(72) Inventor: LAN, Tianbao, Dongguan, Guangdong 523000 (CN); HU, Chuanpeng, Dongguan, Guangdong 523000 (CN); LI, Changjiang, Dongguan, Guangdong 523808 (CN)
(74) Representative: Icosa
(86) International application number: PCT/CN2021/074454
(87) International publication number: WO 2022/160267

(57) **Abstract**

A battery pack is disclosed, including a battery module, a first housing, and a second housing, the first housing and the second housing forming an accommodating space for accommodating the battery module. The first housing includes a first edge portion, the first edge portion is provided with a first groove, a first resin layer is provided in the first groove, and the first resin layer is adhesively fixed to an inner wall of the first groove. The second housing includes a second edge portion. The first resin layer is provided between the first housing and the second housing and is connected to the second edge portion, and the first resin layer within the first groove is in a compressed state, with a compression amount of 20% to 30% of a length of the first resin layer in natural state. This application further relates to an electric apparatus and a method for assembling a battery pack. The foregoing battery pack can effectively inhabit impurities from entering the battery pack, reducing the impact of impurities on the battery pack.

## Description

### TECHNICAL FIELD

This application relates to the field of battery technologies, and in particular, to a battery pack, an electric apparatus, and a method for assembling a battery pack.

### BACKGROUND

In existing battery structures, a battery typically includes two housings and a battery module provided in the housings. The two housings are fastened together using fasteners such as screws, leaving a gap between the two housings. Impurities may enter the battery through the gap between the housings, thereby affecting the use of the battery.

### SUMMARY

In view of this, it is necessary to provide a battery pack, an electric apparatus, and a method for assembling a battery pack, so as to enable the battery pack to effectively inhibit impurities from entering the battery pack, reducing the impact of impurities on the battery pack.

An embodiment of this application provides a battery pack including a battery module, a first housing, and a second housing, the first housing and the second housing forming an accommodating space for accommodating the battery module, where the first housing includes a first edge portion, the first edge portion is provided with a first groove, a first resin layer is provided in the first groove, and the first resin layer is adhesively fixed to an inner wall of the first groove; the second housing includes a second edge portion; and the first resin layer is provided between the first housing and the second housing and is connected to the second edge portion, and the first resin layer within the first groove is in a compressed state, with a compression amount of 20% to 30% of a length of the first resin layer in natural state.

In one possible implementation, the first resin layer is in direct contact connection with the second edge portion.

In one possible implementation, the first edge portion is provided with a second groove in communication with the first groove, the first resin layer is provided in the second groove, and the first resin layer is connected to an inner wall of the second groove.

In one possible implementation, the first resin layer is in direct contact connection with the inner wall of the second groove.

In one possible implementation, the first groove is closer to the battery module than the second groove.

In one possible implementation, the first edge portion is provided with a first protrusion, the second groove is closer to the battery module than the first protrusion, a first recess in communication with the second groove is provided between the first edge portion and the second edge portion, and the first protrusion is located at the first recess. The first resin layer is able to extend from the first recess to the first protrusion to accommodate a greater portion of the deformed first resin layer.

In one possible implementation, the first resin layer is formed by providing and fixing resin in the first groove.

In one possible implementation, the second edge portion includes a second surface connected to the first edge portion, where the second surface is a plane structure with a flatness of A, A being less than or equal to 0.3 mm.

In one possible implementation, the battery module includes a plurality of stacked battery cells, and a direction in which the plurality of battery cells are stacked is a second direction; along a first direction, a thickness of the second edge portion is T; the first edge portion and the second edge portion are in fit connection along the second direction; along the second direction, a height of the second groove is H₁, where H₁ ranges from 0.2T to 0.25T; and the second direction is perpendicular to the first direction.

In one possible implementation, along the first direction, a width of the second groove is Wi, and Wi ranges from 0.2T to 0.25T.

In one possible implementation, the thickness T of the second edge portion ranges from 2.5 mm to 3 mm.

In one possible implementation, the first housing is provided with a first hole; the first resin layer includes a first part and a second part, the first part being connected to the second part; when viewed along a third direction, the first part is closer to the battery module than the first hole; and the third direction is perpendicular to both the first direction and the second direction.

In one possible implementation, a Shore hardness C of the first resin layer is 20° to 35°.

In one possible implementation, the first housing includes a first region connected to the first edge portion, where the first region is provided in the second housing, and a second recess is provided between the first region and the second housing, the first groove being in communication with the second recess for better accommodating the first resin layer.

In one possible implementation, the first resin layer is provided in the second recess.

In one possible implementation, the battery pack further includes a protective member, where the protective member is provided between the battery module and the second housing for protecting the battery module.

In one possible implementation, the compression amount is 20% to 21.4% of the length of the first resin layer in natural state.

In one possible implementation, the compression amount is 21.4% to 25% of the length of the first resin layer in natural state.

In one possible implementation, the compression amount is 25% to 27% of the length of the first resin layer in natural state.

In one possible implementation, the compression amount is 27% to 30% of the length of the first resin layer in natural state, which can inhibit impurities from entering the battery pack.

This application further provides an electric apparatus including a body and a battery pack accommodated within the body, where the battery pack is the battery pack described in any one of the foregoing possible implementations.

This application further provides a method for assembling a battery pack, including the following steps:
injecting resin into a first groove of a first housing;
processing the resin at the first groove to form a first resin layer;
fixing a battery module in a second housing;
fixing the first housing provided with the first resin layer to the second housing, where the first resin layer is located between the first housing and the second housing; and
compressing the first resin layer through the first housing and the second housing, a compression amount of the first resin layer being 20% to 30% of a length of the first resin layer in natural state.

According to the battery pack, electric device, and method for assembling the battery pack provided in this application, the first resin layer is provided in the first groove, and when the first housing and the second housing jointly compress the first resin layer, the compression amount of the first resin layer is 20% to 30% of its length in natural state, which allows the first resin layer to effectively inhibit impurities, such as water, from entering the battery pack, thereby reducing the impact of impurities on the battery pack.

### BRIEF DESCRIPTION OF THEDRAWINGS

FIG. 1 is a schematic three-dimensional view of a battery pack according to an embodiment of this application.
FIG. 2 is a schematic sectional view of the battery pack in FIG. 1 along the direction II-II.
FIG. 3 is a schematic cross-sectional view of the battery pack in FIG. 2 provided with a first resin layer.
FIG. 4 is a schematic sectional view of a battery pack provided with a first resin layer according to another embodiment.
FIG. 5 is a schematic three-dimensional view of a first housing of the battery pack in FIG. 1.
FIG. 6 is a schematic top view of a first housing of the battery pack in FIG. 5.
FIG. 7 is a schematic cross-sectional view of a first housing of the battery pack in FIG. 6 along the direction VII-VII.
FIG. 8 is a schematic cross-sectional view of a battery pack provided with a third housing according to an embodiment of this application.
FIG. 9 is a schematic cross-sectional view of the battery pack in FIG. 8 provided with a second resin layer.
FIG. 10 is a schematic top view of a third housing of the battery pack in FIG. 6.
FIG. 11 is a schematic cross-sectional view of a battery pack according to another embodiment of this application, where a first housing and a third housing of the battery pack are provided with a protrusion.
FIG. 12 is a schematic cross-sectional view of the battery pack in FIG. 11, where a first resin layer and a second resin layer of the battery pack extend toward the protrusion.
FIG. 13 is a schematic exploded view of the battery pack in FIG. 1.
FIG. 14 is a schematic exploded view of a battery cell.
FIG. 15 is a flowchart of a method for assembling a battery pack according to another embodiment of this application.

**Reference signs of main components:**

| | |
|---|---|
| Battery pack | 100 |
| First housing | 10 |
| First edge portion | 11 |
| First groove | 111 |
| Second groove | 112 |
| Height of second groove | H₁ |
| Width of second groove | W₁ |
| First hole | 113 |
| First protrusion | 114 |
| First region | 115 |
| Plug connector | 116 |
| Dotted line | K |
| First recess | M |
| Inner wall | M₁ |
| Second recess | O |
| Second housing | 20 |
| Second edge portion | 21 |
| First surface | 210 |
| Second surface | 211 |
| Thickness of second edge portion | T |
| Side wall | 22 |
| Opening | 221 |
| Accommodating space | 222 |
| Third housing | 30 |
| Third edge portion | 31 |
| Third groove | 311 |
| Fourth groove | 312 |
| Height of fourth groove | H₂ |
| Width of fourth groove | W₂ |
| Third hole | 313 |
| Third protrusion | 314 |
| Third region | 315 |
| Third recess | N |
| Fourth recess | P |
| First resin layer | 40 |
| First part | 41 |
| Second part | 42 |
| Natural length of first resin layer | W₃ |
| Second resin layer | 50 |
| Third part | 51 |
| Fourth part | 52 |
| Battery module | 60 |
| Battery cell | 61 |
| Electrode assembly | 611 |
| Metal part | 612 |
| Battery cell housing | 613 |
| Accommodating cavity | 6131 |
| Protective member | 70 |
| Fixing bracket | 80 |
| Circuit board | 90 |

### DETAILED DESCRIPTION OF EMBODIMENTS

The following describes the technical solutions in some embodiments of this application with reference to the accompanying drawings in some embodiments of this application. Apparently, the described of some embodiments are only some rather than all of the embodiments of this application.

The following describes some embodiments of this application in detail. However, this application may be embodied in many different implementations and should not be construed as being limited to the example embodiments set forth herein. Rather, these example embodiments are provided so that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected the element B or an intermediate element C may be present there between such that the element A and the element B are indirectly connected to each other.

Further, the use of "may" when describing embodiments of this application relates to "one or more embodiments of this application."

The terminology used herein is merely intended to describe specific some embodiments rather than to limit this application. As used herein, the singular forms are intended to include the plural forms as well, unless the context clearly indicates otherwise. It should be further understood that the terms "comprise" or "include", when used in this specification, specify the presence of stated features, numbers, steps, operations, elements, and/or components but do not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different orientations of a device or an apparatus in use or operation in addition to the orientations depicted in the figures. For example, if the device in the figures is turned over, elements described as "over" or "above" other elements or features would then be oriented "beneath" or "below" the other elements or features. Thus, the example term "above" may include both orientations of above and below. It should be understood that although the terms first, second, third, or the like may be used herein to describe various elements, components, zones, layers, and/or portions, these elements, components, zones, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

An embodiment of this application provides a battery pack including a battery module, a first housing, and a second housing, the first housing and the second housing forming an accommodating space for accommodating the battery module, the first housing includes a first edge portion, the first edge portion is provided with a first groove, a first resin layer is provided in the first groove, and the first resin layer is adhesively fixed to an inner wall of the first groove. The second housing includes a second edge portion. The first resin layer is provided between the first housing and the second housing and is connected to the second edge portion, and the first resin layer within the first groove is in a compressed state, with a compression amount of 20% to 30% of a length of the first resin layer in natural state.

In the foregoing battery pack, the first resin layer is provided between the first housing and the second housing, and the first resin layer is in a compressed state in the first groove, with the compression amount of the first resin layer being 20% to 30% of the length of the first resin layer in natural state. This effectively inhibits impurities from entering the battery pack, reducing the impact of impurities on the battery pack.

The following describes in detail some embodiments with reference to the accompanying drawings. In absence of conflicts, the following some embodiments and features in some embodiments may be combined.

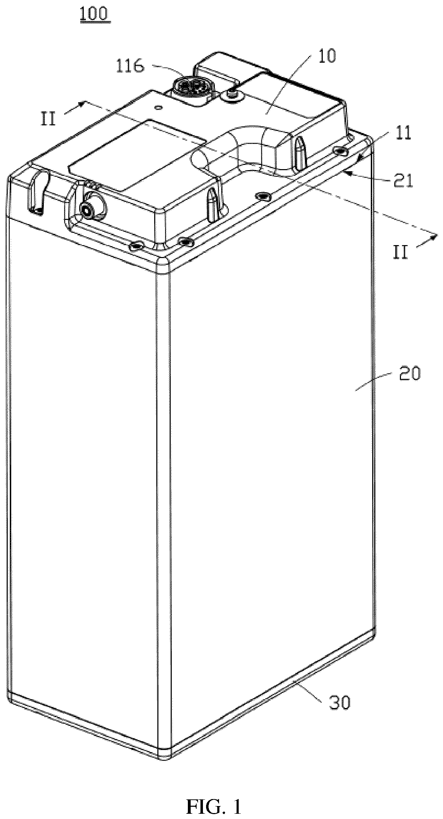

Referring to FIGs 1, 2 and 3, a battery pack 100 is provided, including a first housing 10, a second housing 20, a first resin layer 40, and a battery module 60. The first housing 10 is fixed to the second housing 20 using fasteners such as screws. The second housing 20 has four interconnected side walls 22, and the four side walls 22 form a middle frame structure with openings 221 at two ends. The four side walls 22 form an accommodating space 222, and the first housing 10 is configured to close the openings 221. Preferably, the four side walls 22 may be integrally formed through, for example, the aluminum extrusion process. It should be understood that in other embodiments, the four side walls 22 may be fixedly connected in a detachable manner, and the second housing 20 may also include a bottom wall provided at one of the openings 221.

The battery module 60 is located within the accommodating space 222, and the first housing 10 covers one of the openings 221 of the second housing 20, so that the battery module 60 is located inside the first housing 10 and the second housing 20. The first resin layer 40 is provided between the first housing 10 and the second housing 20, inhibiting impurities from entering the battery pack 100 and providing waterproof function at the position where the first housing 10 and the second housing 20 are connected, thereby protecting the battery module 60 inside the battery pack 100.

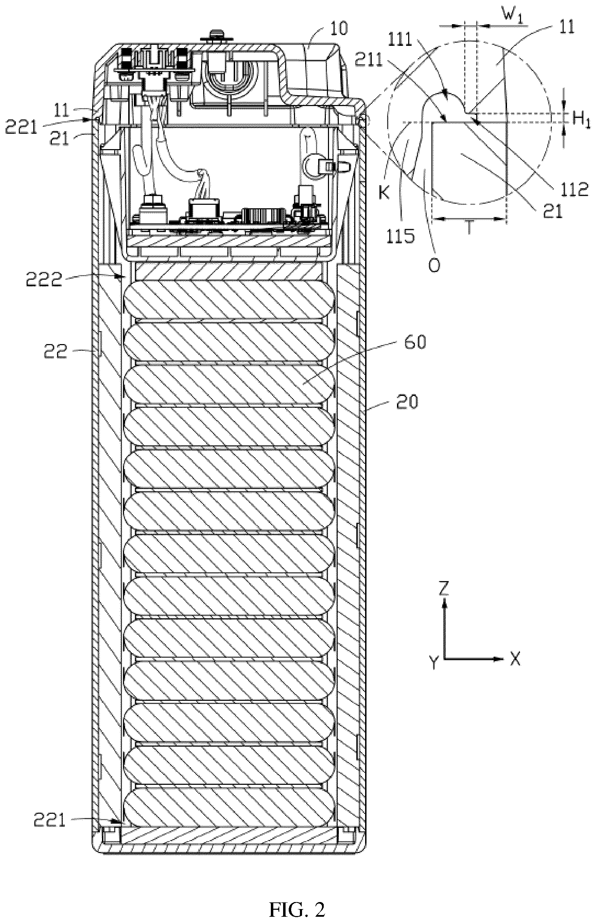

Refer to FIGs. 2, 3, 5, and 6. Specifically, the first housing 10 includes a first edge portion 11, where the first edge portion 11 is the part of the side of first housing 10 facing the second housing 20 that corresponds to the end of the second housing 20. When the first housing 10 and the second housing 20 are fixedly connected, the first edge portion 11 is fixed to the second housing 20.

The first edge portion 11 is provided with a first groove 111 and a second groove 112. The first housing 10 is provided with a first hole 113 that runs through itself. The second groove 112 is provided at one side of the first groove 111 and is in communication with the first groove 111. The first hole 113 is provided at the side of the second groove 112 far away from the first groove 111. Further, the first groove 111 is closer to the battery module 60 provided in the second housing 20 than the second groove 112, and the second groove 112 is closer to the battery module 60 provided in the second housing 20 than the first hole 113.

The first groove 111 is depressed from the first housing 10 in a direction leaving the second housing 20. The first resin layer 40 is provided in the first groove 111 and is adhesively fixed to an inner wall of the first groove 111. For example, the inner wall of the first groove 111 refers to the position where the first resin layer 40 is in contact with the first groove 111. The first groove 111 is provided at the first edge portion 11, and the first resin layer 40 is provided at the first groove 111. If the first resin layer 40 is deformed, the side wall of the first groove 111 is able to restrict the deformed first resin layer 40 from extending toward the inside of the first housing 10, thereby preventing the first resin layer 40 from interfering with other structures located in the first housing 10.

In this embodiment, preferably, the cross-section of the first groove 111 is arc-shaped. When the first groove 111 is provided in an arc-shape, on the one hand, the sealing area between the first housing 10 and the second housing 20 can be increased; on the other hand, when the first housing 10 and the second housing 20 compress the first resin layer 40, the compression amount of the first resin layer 40 is more uniform. Additionally, when the first groove 111 is provided in an arc-shape, the first resin layer 40 can better fill the first groove 111.

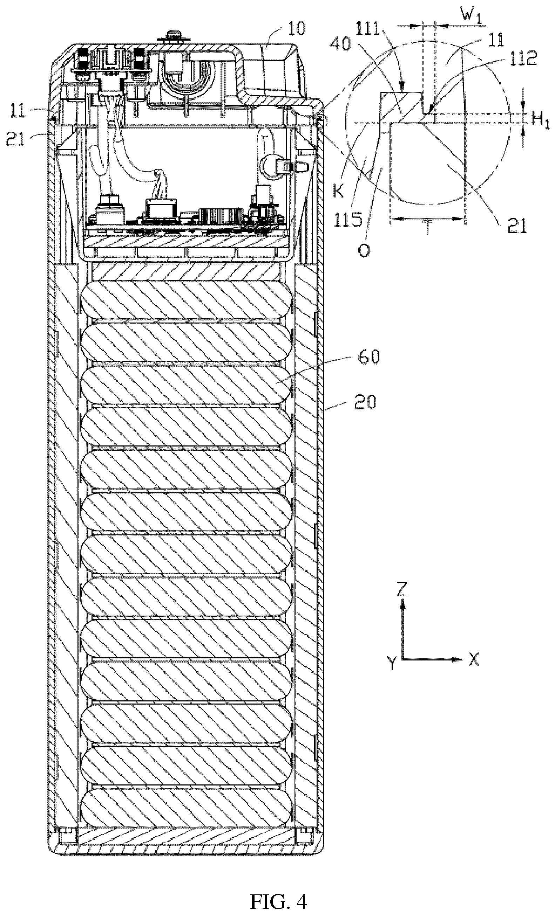

Referring to FIG. 4, it should be understood that in other embodiments, the cross-section of the first groove 111 may be in other shapes, such as triangular or rectangular.

The second groove 112 is depressed from the first housing 10 in a direction leaving the second housing 20. When the first housing 10 provided with the first resin layer 40 is assembled onto the second housing 20, the first housing 10 and the second housing 20 simultaneously compress the first resin layer 40, so that the first resin layer 40 is able to deform. Part of the deformed first resin layer 40 may be provided in the second groove 112. The first housing 10 and the second housing 20 together secure the first resin layer 40. When the first resin layer 40 is provided in the second groove 112, the first resin layer 40 is in direct contact connection with the inner wall of the second groove 112, meaning that the first resin layer 40 is in contact with and connected to the second groove 112, but not connected by bonding. Further, the inner wall of the second groove 112 refers to the part where the first resin layer 40 is in contact with the second groove 112.

To better describe the relationship between the structures, X, Y, and Z coordinate axes will be used. The X, Y, and Z coordinate axes are mutually perpendicular. For example, along a first direction, the width of the second groove 112 is Wi, and W₁ ranges from 0.2T to 0.25T. For example, along a second direction, the height of the second groove 112 is H₁, and H₁ ranges from 0.2T to 0.25T. In this embodiment, the first direction is a direction along the X-axis and the second direction is a direction along the Z-axis, the second direction being perpendicular to both the first direction and the second groove 112. Here, T is a value in a specified range, and the values of W₁ and H₁ vary with the change of T.

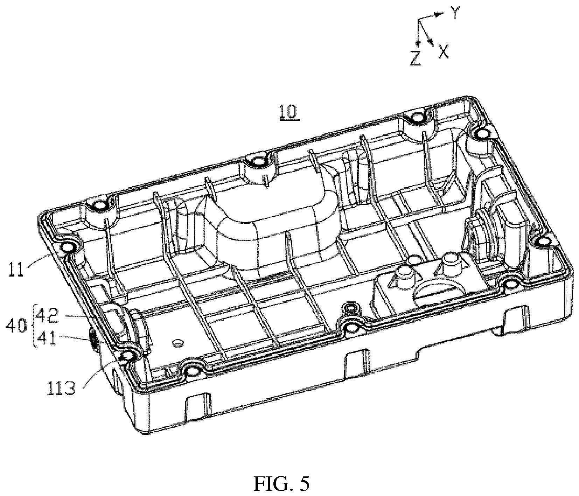

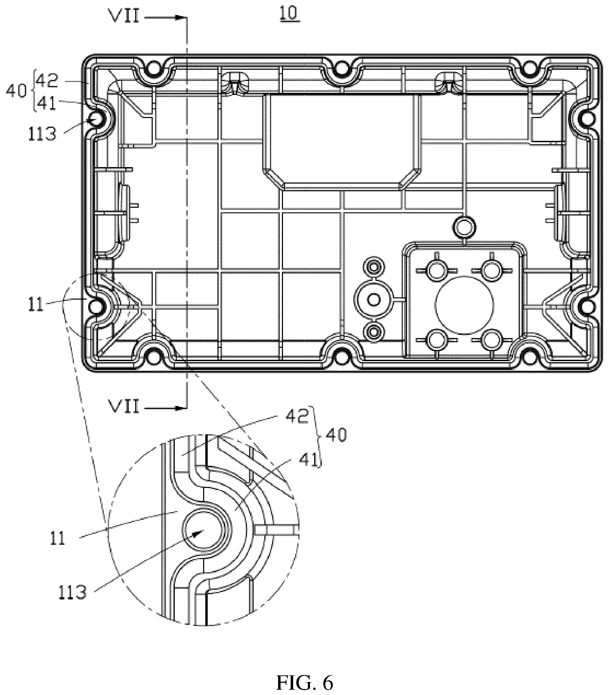

Refer to FIGs 5 and 6. Preferably, the first hole 113 is configured to accommodate fasteners for fixing the first housing 10 and the second housing 20, so as to implement the locking and fixing of the first housing 10 and the second housing 20. In one embodiment, the first hole 113 is a circular hole. For example, when observed along a third direction, the first hole 113 is located further away from the accommodating space 222 compared to the first groove 111 and the second groove 112, so that the first resin layer 40 is closer to the battery module 60 than the first hole 113, thereby preventing water or other liquids from flowing into the interior of the battery pack 100 through the first hole 113, and reducing the influence of impurities entering the battery pack 100. In this embodiment, the third direction is a direction along the Y-axis, and the third direction is perpendicular to both the first direction and the second direction.

In this embodiment, the first housing 10 is provided with a plurality of first holes 113, and the plurality of first holes 113 are disposed along the circumferential direction of the first edge portion 11. Preferably, when observed along the Z direction, the first edge portion 11 is substantially rectangular in shape, and the plurality of first holes 113 enclose a rectangular shape. Referring to FIG. 5. "substantially rectangular" means that it looks like rectangular with a deviation of +/-5 mm to +/-10 mm. It should be understood that in other embodiments, the shape of the first edge portion 11 is not limited to this. A plurality of the first holes 113 are provided so that the plurality of first holes 113 are provided on the first edge portion 11 in a circumferential structure, allowing fasteners to be provided at a plurality of positions simultaneously, enabling a tighter connection between the first housing 10 and the second housing 20.

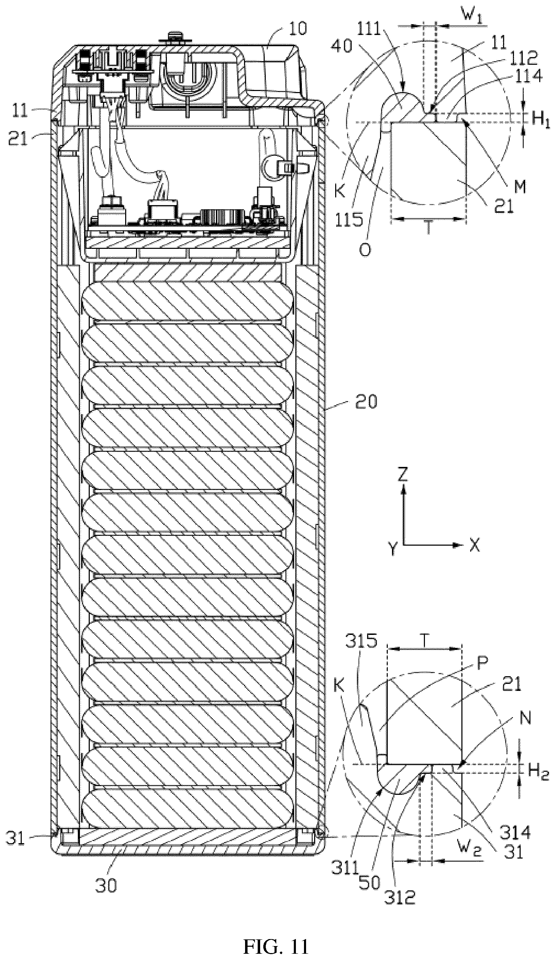

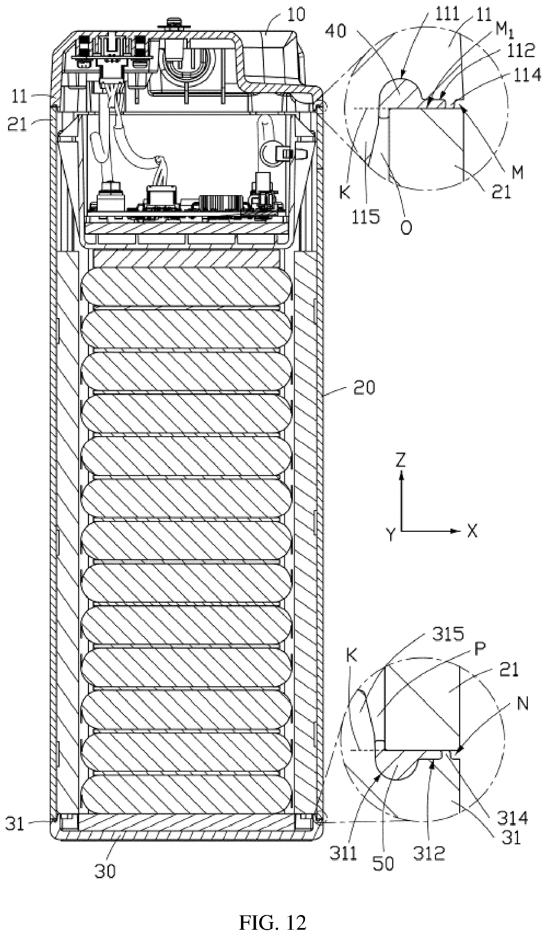

Referring to FIG. 11, in one embodiment, the first edge portion 11 is further provided with a first protrusion 114, and the second groove 112 is closer to the battery module 60 than the first protrusion 114. A first recess M is present between the first edge portion 11 and the second edge portion 21. The first recess M is in communication with the second groove 112. The first protrusion 114 is located at the first recess M. With the first protrusion 114 provided on the first edge portion 11, a gap is formed between the first housing 10 and the second housing 20. If the second groove 112 is not able to accommodate the deformed first resin layer 40, the first resin layer 40 may be provided in the first recess M, as shown in FIG. 12.

If the first resin layer 40 extends to the first recess M, the part reaching the first recess M is in contact connection with the first housing 10 and the second housing 20. Preferably, the first resin layer 40 is in direct contact connection with the inner wall M₁ of the first recess M.

Referring to FIG. 2 again, the part of the first edge portion 11 close to the battery module 60 extends into the second housing 20. Specifically, the part of the first edge portion 11 close to the battery module 60 is provided with a first region 115. For example, with the dotted line K in the figure as the dividing line, the part inside the second housing 20 is the first region 115, where the part inside the second housing 20 is the part located inside the accommodating space 222. The first region 115 is closer to the battery module 60 than the first groove 111, and the first region 115 extends into the second housing 20 by a predetermined distance. A second recess O is present between the first region 115 and the second housing 20. The first groove 111 is in communication with the second recess O. When the first groove 111 and the second groove 112 are not able to accommodate the first resin layer 40, the first resin layer 40 is able to extend from the first groove 111 to the second recess O, so that the first housing 10 and the second housing 20 are able to better accommodate the first resin layer 40.

The second edge portion 21 includes a first surface 210 and a second surface 211. Along the Z-axis direction, the second surface 211 is disposed opposite the first groove 111. The first resin layer 40 is in contact connection with the second surface 211, more effectively inhibiting impurities from entering the battery pack 100 and reducing the impact of impurities on the battery pack 100. The first surface 210 is provided on the inner wall of the second edge portion 21 close to the battery module 60. The first resin layer 40 is provided between the first region 115 and the first surface 210. Preferably, the first resin layer 40 is in contact connection with the first surface 210, inhibiting the first resin layer 40 from moving along a direction opposite to the Z-axis direction, reducing the influence of the first resin layer 40 on the battery module 60.

Refer to FIGs 1, 2 and 3. The second housing 20 includes four interconnected side walls 22. The four side walls 22 form a middle frame structure. The four side walls 22 form an accommodating space 222, and the battery module 60 is located in the accommodating space 222. The second housing 20 includes a second edge portion 21, the second edge portion 21 is the edge part of the side of the second housing 20 facing the first housing 10, and is directly opposite the first edge portion 11. The first housing 10 and the second housing 20 are fixed by providing fasteners at the positions on the first edge portion 11 and the second edge portion 21, thus realizing the fixation between the first housing 10 and the second housing 20.

The second surface 211 included in the second edge portion 21 is a surface directly opposite the first housing 10 in the second direction. The second surface 211 is a plane structure with a flatness of A. Preferably, the value of A is S mm, where the unit of the flatness A is the same as the unit of the first resin layer 40. For example, when the length of the first resin layer 40 in natural state is 10 mm, the unit of the flatness A is also millimeter. In one embodiment, along the second direction, the flatness A is less than or equal to 0.3 mm. When the first resin layer 40 is compressed, the first resin layer 40 needs to cover the tolerance of the flatness A to achieve a sealing effect.

Along the second direction, the length of the first resin layer 40 in natural state is the length along the second direction. Preferably, the length of the first resin layer 40 in natural state is the maximum vertical length along the second direction. Preferably, the cross-section of the first resin layer 40 along the second direction is substantially circular, and the length of the first resin layer 40 in natural state is the diameter of the circle.

Along the second direction, the thickness of the second edge portion 21 is T, where the thickness T is a value within the specific range mentioned earlier. The height and width of the second groove 112 are associated with the thickness T of the second edge portion 21. Further, the thickness T ranges from 2.5 mm to 3 mm. Specifically, in one embodiment, the value of the thickness T is 2.5 mm. It should be understood that in other embodiments, the value of the thickness T may alternatively be 2.6 mm, 2.7 mm, 2.8 mm, 2.9 mm, and so on. The width Wi and the height H₁ of the second groove 112 are set to 0.2T to 0.25T, so that the second groove 112 is able to better accommodate the compression amount of the first resin layer 40.

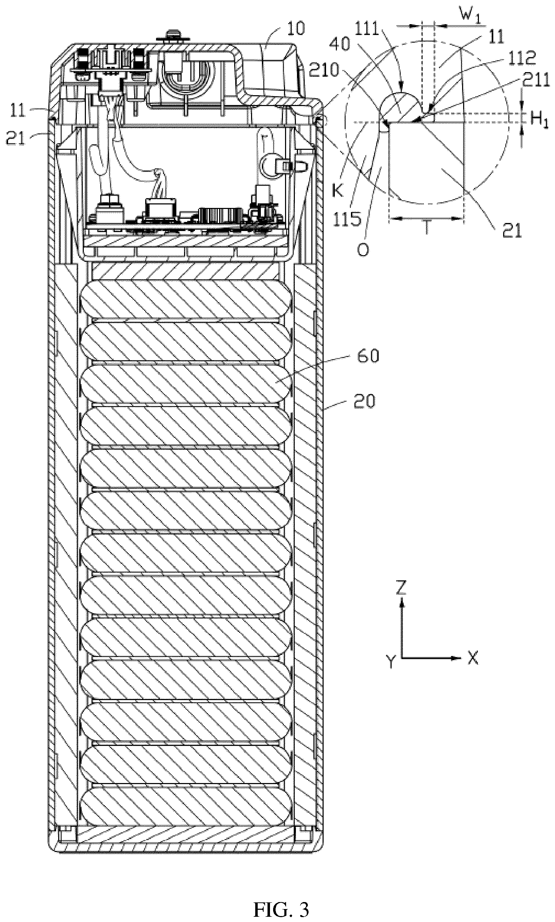

Refer to FIGs 3, 6, and 7. The first resin layer 40 is formed by providing and fixing liquid resin in the first groove 111. The first resin layer 40 includes a first part 41 and a second part 42 connected to the first part 41. In one embodiment, the first resin layer 40 includes a sealing adhesive. The configuration process of the sealing adhesive is: liquid silica gel is applied to the first groove 111 of the first housing 10 by using an apparatus with a specific nozzle size, and different glue viscosities and dispensing accuracies; and then the gel is dried at a temperature of 100°C to 200°C to achieve the drying of the sealing adhesive. The first resin layer 40 undergoes deformation under the squeezing action of the first housing 10 and the second housing 20, so as to be provided in the gap between the first housing 10 and the second housing 20, inhibiting impurities, such as water, from entering the battery pack 100 and reducing the impact of impurities on the battery pack 100.

When the first resin layer 40 is located in the first groove 111, the first part 41 corresponds to the first hole 113, and the first part 41 is closer to the battery module 60 than the first hole 113. Preferably, when observed along the Z direction, the first part 41 is substantially arced in shape and is provided along a part of the edge of the first hole 113. This allows the first resin layer 40 to bypass the first hole 113, avoiding interference with the connection between the first housing 10 and the second housing 20, and improving the sealing performance.

In one embodiment, when observed along the Y direction, the first hole 113 is closer to the battery module 60 than the second part 42, and the second part 42 is substantially straight line in shape. It should be understood that in other embodiments, the second part 42 and the first hole 113 may also be in a straight line, meaning that the distances of both from the battery module 60 are the same. The shapes of the first part 41 and the second part 42 are not limited to the foregoing description. For example, if the first hole 113 is square, the shape of the first part 41 changes accordingly.

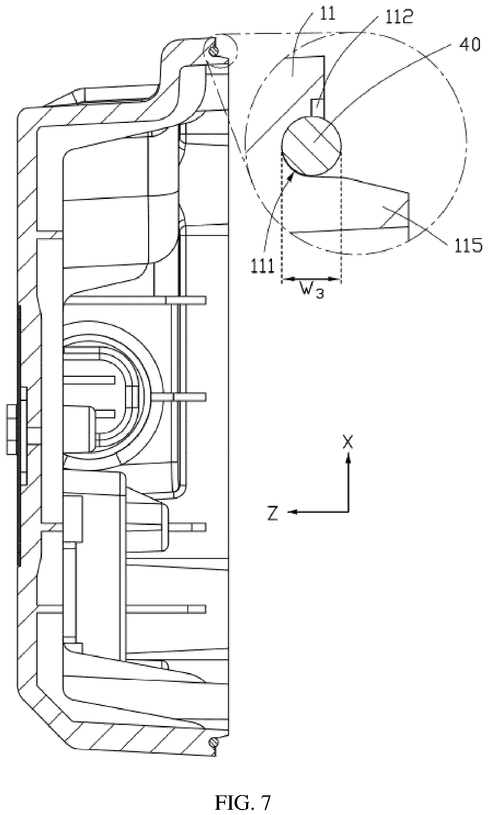

When the first resin layer 40 is in an uncompressed natural state, its cross-section is curved, and the natural length of the first resin layer 40 is denoted as W₃, as shown in FIG. 7. Refer to FIG. 3, which shows the compressed state of the first resin layer 40. The compression amount is 20% to 30% of the length of the first resin layer 40 in natural state. Further, the compression amount of the first resin layer 40 is denoted as L mm. If the unit of the length of the first resin layer 40 in natural state is mm, the unit of the compression amount of the first resin layer 40 is also mm. For example, if the length of the first resin layer 40 in natural state is 10 mm, the compression amount of the first resin layer 40 is between 2 mm and 3 mm.

Preferably, the compression amount is 20% to 21.4% (inclusive) of the length of the first resin layer 40 in natural state, which facilitates the assembly of the first housing 10 and the second housing 20.

Preferably, the compression amount is 21.4% to 25% (inclusive) of the length of the first resin layer 40 in natural state. The first resin layer 40 and the second edge portion 21 are stably connected to inhibit impurities from entering the battery pack 100.

Preferably, the compression amount is 25% to 27% of the length of the first resin layer 40 in natural state. The battery pack 100 remains stable under the environment of higher temperature and high humidity, inhibiting impurities from entering the battery pack 100.

Preferably, the compression amount of the first resin layer 40 is 27% to 30% of the length of the first resin layer 40 in natural state. The first resin layer 40 is more provided in the second groove 112, more effectively inhibiting other impurities from entering the battery pack 100.

Preferably, the upper limit of the compression amount of the first resin layer 40 may be calculated by dividing the flatness A of the second edge portion 21 by the initial height of the first resin layer 40 along the second direction. Specifically, the compression amount of the first resin layer 40 does not exceed this upper limit, further enhancing the reliability of the first resin layer 40.

An IPX7 waterproof rating test was performed on the battery pack 100. The battery pack 100 was put in a water tank, and the battery pack 100 was immersed 1 meter under water for 30 minutes. Then, the battery pack 100 was disassembled to check whether water has entered the battery pack 100. The test results are shown in the following Table 1:

**Table 1**

| Compression amount | IPX7 test result |
|---|---|
| 0% to 10% | Fail |
| 10% to 20% (exclusive) | Fail |
| 20% (inclusive) to 30% | Pass |
| Greater than or equal to 30% | Fail |

An0 IPX7 waterproof rating test was performed on the battery pack 100 in different environments. The battery pack 100 was put in a water tank, and the battery pack 100 was immersed 1 meter under water for 30 minutes. Then, the battery pack 100 was disassembled to check whether water has entered the battery pack 100. The test results are shown in the following Table 2:

**Table 2**

| Compression amount | Test environment | IPX7 test result |
|---|---|---|
| 20% to 25% (inclusive) | Temperature: 85°C; humidity: 85%; and test was performed after 120 hours of placement | Pass |
| 25% to 30% (inclusive) | Temperature: 85°C; humidity: 85%; and test was performed after 120 hours of placement | Pass |

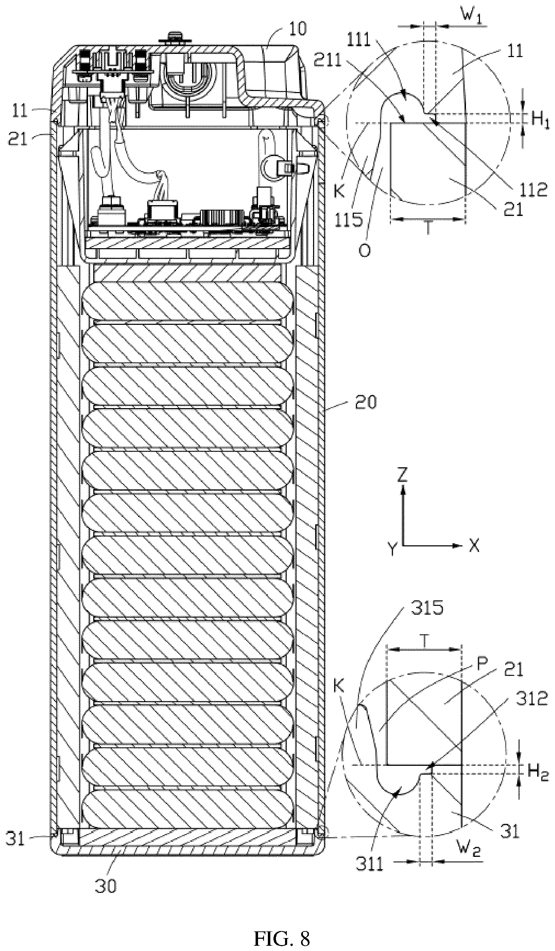

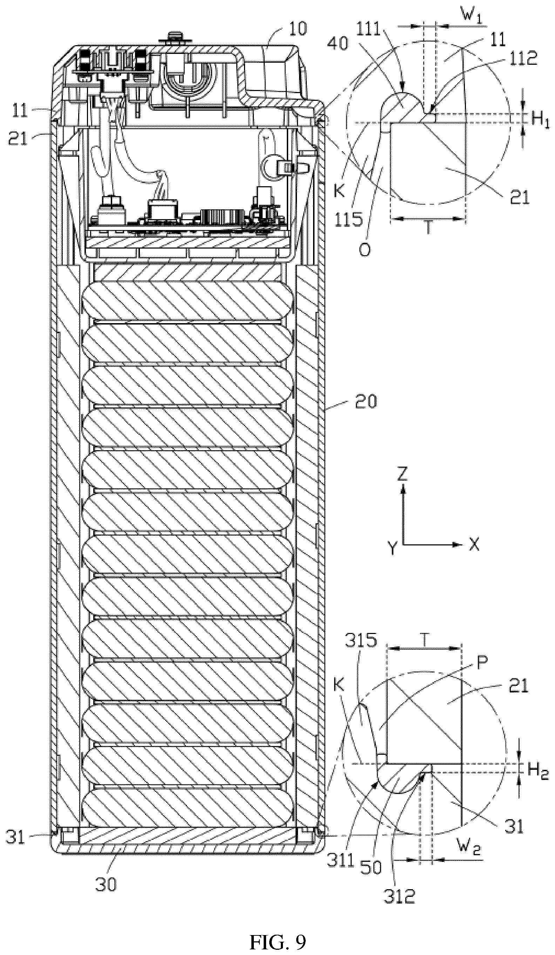

Refer to FIGs. 8 and 9. In one embodiment, the battery pack 100 further includes a third housing 30 and a second resin layer 50. The third housing 30 is provided at an end of the second housing 20 away from the first housing 10. Together, the first housing 10, the second housing 20, and the third housing 30 form an outer shell for accommodating the battery module 60 to protect the battery module 60. The second resin layer 50 is provided between the second housing 20 and the third housing 30, effectively inhibiting the entry of impurities into the battery pack 100, thereby protecting the battery module 60 inside the battery pack 100.

Specifically, the third housing 30 includes a third edge portion 31, where the third edge portion 31 is the part of the side of third housing 30 facing the second housing 20 that corresponds to the end of the second housing 20. The second housing 20 includes another second edge portion 21, and the third edge portion 31 is fixed to the second edge portion 21. Preferably, the third edge portion 31 and the another second edge portion 21 may also be fixed together internally using fasteners, such as screws.

Refer to FIGs. 8, 9 and 10. The third edge portion 31 is provided with a third groove 311 and a fourth groove 312. The third housing 30 is provided with a third hole 313 that passes through itself. The fourth groove 312 is positioned at one side of the third groove 311 and is in communication with the third groove 311. The third hole 313 is provided at the side of the fourth groove 312 far away from the third groove 311. Further, the third groove 311 is closer to the battery module 60 provided in the second housing 20 than the fourth groove 312, and the fourth groove 312 is closer to the battery module 60 provided in the second housing 20 than the third hole 313.

The third groove 311 is depressed from the third housing 30 in a direction away from the second housing 20. The second resin layer 50 is provided in the third groove 311 and is adhesively fixed to an inner wall of the third groove 311. Further, the inner wall of the third groove 311 refers to the position where the second resin layer 50 contacts the third groove 311. Similar to the first groove 111, the side wall of the third groove 311 is also able to restrict the deformed second resin layer 50 from extending toward the inside of the third housing 30, thereby preventing the second resin layer 50 from interfering with other structures located in the third housing 30.

The fourth groove 312 is depressed from the third housing 30 in a direction away from the second housing 20. When the third housing 30 provided with the second resin layer 50 is assembled onto the second housing 20, the second housing 20 and the third housing 30 simultaneously compress the second resin layer 50, so that the second resin layer 50 is able to deform. Part of the deformed second resin layer 50 may be provided in the fourth groove 312. The second housing 20 and the third housing 30 together secure the second resin layer 50. When the second resin layer 50 is provided in the fourth groove 312, the second resin layer 50 is in contact connection with the inner wall of the fourth groove 312, meaning that the second resin layer 50 is in contact and connected to the fourth groove 312, but not connected by bonding. Further, the inner wall of the fourth groove 312 refers to the part where the second resin layer 50 contacts the fourth groove 312.

For example, along the first direction, the width of the fourth groove 312 is W₂, and W₂ ranges from 0.2T to 0.25T. For example, along the second direction, the height of the second groove 112 is H₁, and H₁ ranges from 0.2T to 0.25T, the second direction being perpendicular to both the first direction and the fourth groove 312. Here, T represents the thickness of the second edge portion 21, and the values of W₂ and H₂ vary with changes in T.

Preferably, the third hole 313 is configured to accommodate fasteners that fix the second housing 20 and the third housing 30, so as to implement the locking and fixing of the second housing 20 and the third housing 30. In one embodiment, the third hole 313 is a circular hole. When observed along the third direction, the third hole 313 is located further away from the accommodating space 222 compared to the third groove 311 and the fourth groove 312. so that the second resin layer 50 is closer to the battery module 60 than the third hole 313, thereby preventing the entry of water or other liquids into the interior of the battery pack 100 through the third hole 313. This effectively inhibits impurities from entering the battery pack 100 and reduces the impact of impurities on the battery pack 100.

In this embodiment, the third housing 30 is provided with a plurality of third holes 313, and the plurality of third holes 313 are disposed along the circumferential direction of the third edge portion 31. Preferably, when observed along the Z direction, the third edge portion 31 is substantially rectangular in shape, and the plurality of third holes 313 enclose a rectangular shape. Referring to FIG. 8. "substantially rectangular" means that it looks like rectangular with a deviation of +/-5 mm to +/-10 mm. It should be understood that in other embodiments, the shape of the third edge portion 31 is not limited to this. A plurality of the third holes 313 are provided so that the plurality of third holes 313 are provided on the third edge portion 31 in a circumferential structure, thus fasteners can be provided at a plurality of positions simultaneously, enabling a closer connection between the third housing 30 and the second housing 20.

Referring to FIG. 11, in one embodiment, the third edge portion 31 is further provided with a third protrusion 314, and the fourth groove 312 is closer to 1the battery module 60 than the third protrusion 314. A third recess N is present between the third edge portion 31 and the second edge portion 21. The third recess N is in communication with the fourth groove 312. The third protrusion 314 is located at the third recess N. With the third protrusion 314 provided on the third edge portion 31, a gap is formed between the second housing 20 and the third housing 30. If the fourth groove 312 is not able to accommodate the deformed second resin layer 50, the second resin layer 50 may be provided in the third recess N.

If the second resin layer 50 extends to the third recess N, the part extended to the third recess N is in contact connection with the second housing 20 and the third housing 30.

Referring to FIG. 8 again, the part of the third edge portion 31 close to the battery module 60 extends into the second housing 20. Specifically, the part of the third edge portion 31 close to the battery module 60 is provided with a third region 315. The third region 315 is closer to the battery module 60 than the third groove 311, and the third region 315 extends into the second housing 20 by a predetermined distance. A fourth recess P is present between the third region 315 and the second housing 20. The third groove 311 is in communication with the fourth recess P. When the third groove 311 and the fourth groove 312 are not able to accommodate the second resin layer 50, the second resin layer 50 is able to extend from the third groove 311 to the fourth recess P, so that the third housing 30 and the second housing 20 are able to better accommodate the second resin layer 50.

Referring to FIG. 8, another second edge portion 21 also includes a second surface 211, where the second surface 211 is a surface corresponding directly to the third housing 30 in the second direction. The second surface 211 is a plane structure with a flatness of B. Preferably, the value of B is also S mm. In one embodiment, along the second direction, the flatness B is less than or equal to 0.3 mm. When the second resin layer 50 is compressed, the second resin layer 50 needs to cover the tolerance of flatness B to achieve a sealing effect.

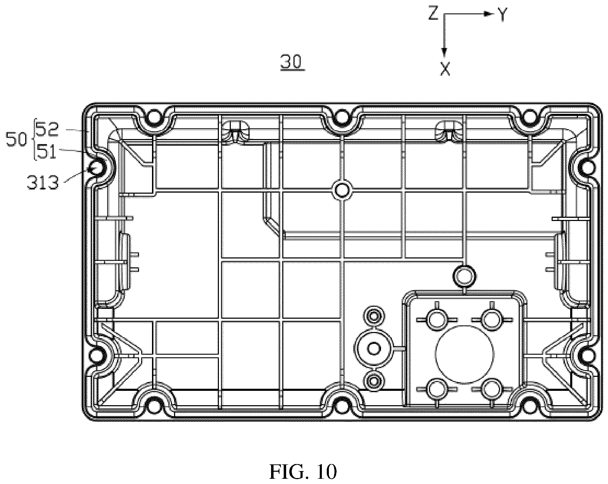

Refer to FIG. 10. The second resin layer 50 is formed by providing and fastening liquid resin in the third groove 311 and the second resin layer 50 has the same structure as the first resin layer 40. The second resin layer 50 includes a third part 51 and a fourth part 52 connected to the third part 51. Similar to the first resin layer 40, the second resin layer 50 also includes a sealing adhesive, and the configuration process of which is the same as the configuration process for the first resin layer 40.

The Shore hardness C of the first resin layer 40 and the second resin layer 50 ranges from 20° to 35°. The hardness of the first resin layer 40 and the second resin layer 50 determines the amount of force required when they are compressed and their ability to recover the original shape after being compressed. Continuous verification proved that when the hardness of the first resin layer 40 and the second resin layer 50 ranges between 20° and 35°, their compression performance and their ability to recover the original shape after deformation are able to effectively inhibit impurities from entering the battery pack 100, for example, satisfying the IPX7 waterproof rating test.

When the second resin layer 50 is located in the third groove 311, the third part 51 corresponds to the third hole 313, and the third part 51 is closer to 1 the battery module 60 than the third hole 313. Preferably, when observed along the Z direction, the second part 42 is substantially arced in shape and is positioned along a part of the edge of the third hole 313. This allows the second resin layer 50 to bypass the third hole 313, avoiding interference with the connection between the second housing 20 and the third housing 30, and improving the sealing performance.

In one embodiment, when observed along the Y direction, the third hole 313 is closer to the battery module 60 than the fourth part 52, and the fourth part 52 is substantially straight line in shape. It should be understood that in other embodiments, the fourth part 52 and the third hole 313 may also be in a straight line, meaning that the distances of both from the battery module 60 are the same. The shapes of the third part 51 and the fourth part 52 are not limited to the foregoing description. For example, if the third hole 313 is square, the shape of the third part 51 changes accordingly.

The second resin layer 50 is in a compressed state, and the compression amount is 20% to 30% of the length of the second resin layer 50 in natural state. The upper limit of the compression amount of the second resin layer 50 may be calculated by dividing the flatness B of another second edge portion 21 by the initial height of the second resin layer 50 along the second direction. Specifically, the compression amount of the second resin layer 50 does not exceed this upper limit, further enhancing the reliability of the second resin layer 50.

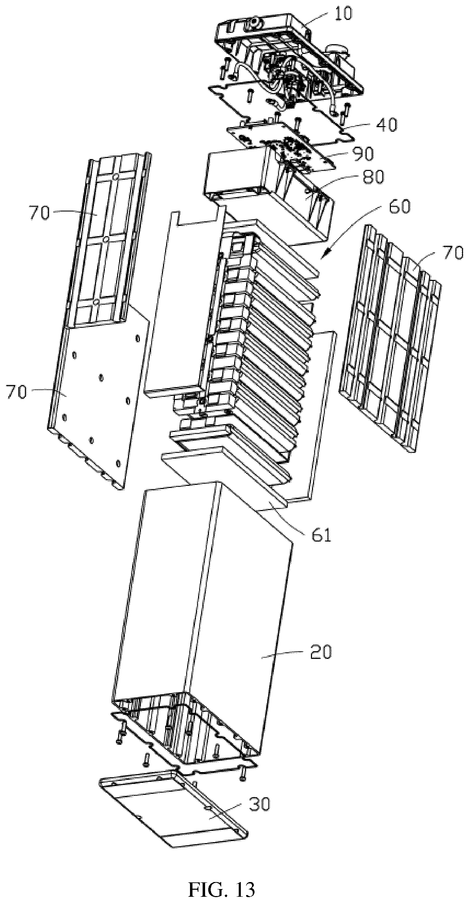

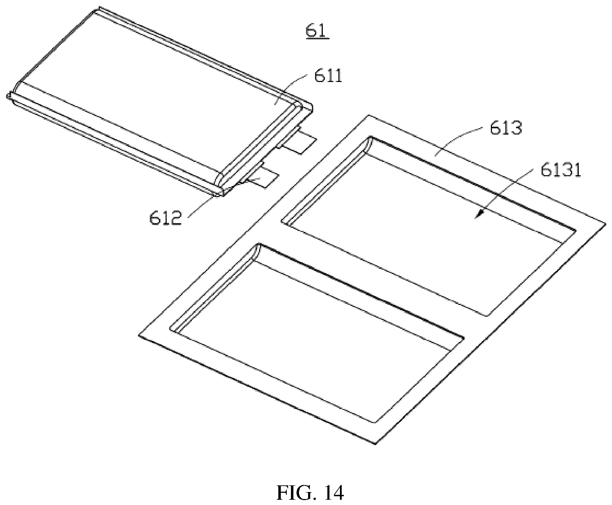

Refer to FIGs. 13 and 14. The battery module 60 includes a plurality of battery cells 61, where the plurality of battery cells 61 are stacked along the second direction. The battery cell 61 includes an electrode assembly 611, a metal part 612, and a battery cell housing 613. The battery cell housing 613 is provided with an accommodating cavity 6131. The electrode assembly 611 is accommodated within the accommodating cavity 6131 of the battery cell housing 613. The metal part 612 is connected to the electrode assembly 611 and extends from the battery cell housing 613. The battery cell housing 613 may have an insulating layer, a metal layer, and an adhesive layer. The battery cell housing 613 is bonded to the electrode assembly 611 through the adhesive layer, so as to implement the connection with the electrode assembly 611. The metal layer is located between the insulating layer and the adhesive layer, enhancing the strength of the battery cell housing 613. The insulating layer is far away from the electrode assembly 611, which can prevent external moisture and water from infiltrating into it and affecting the use of the battery cell 61. The metal part 612 is configured to connect with an external structure, enabling the battery cell 61 to be connected to the external structure. In addition, the metal parts 612 of two adjacent battery cells 61 are connected to achieve communication among a plurality of battery cells 61.

In one embodiment, the metal part 612 is a tab, and two adjacent battery cells 61 are connected through the tab. The plurality of battery cells 61 are configured to supply power to the electric apparatus, so that the electric apparatus can be started.

Refer to FIG. 13. In one embodiment, the battery pack 100 further includes a plurality of protective members 70, where the plurality of protective members 70 are provided between the battery module 60 and the second housing 20 to protect the battery module 60. Further, the protective member 70 is made of contour-fitting foam, designed according to the outer contour of the battery module 60 to better fit onto the battery module 60. When the battery pack 100 experiences vibrations, the protective members 70 prevent collisions between the battery module 60 and the second housing 20, thereby preventing the second housing 20 from damaging the battery module 60, and reducing the probability of safety problems of the battery module 60.

Refer to FIG. 13 again. The battery pack 100 further includes a fixing bracket 80 and a circuit board 90. The fixing bracket 80 is accommodated within the second housing 20, and the circuit board 90 is provided on the fixing bracket 80.

The fixing bracket 80 may be secured inside the second housing 20 by screw fastening or fixed in the second housing 20 by bonding, clamping, or other means. The circuit board 90 may also be fixed onto the fixing bracket 80 by using screws or by bonding. The circuit board 90 is connected to the battery module 60, enabling monitoring and control of the battery module 60, such as controlling the current and voltage of the battery module 60. Further, the circuit board 90 is electrically connected to the metal part 612 on the battery cell 61.

The first housing 10 is further provided with a plug connector 116, the plug connector 116 is electrically connected to the circuit board 90. When the battery pack 100 is used, the connector of an electric apparatus is connected to the plug connector 116, so as to supply power to the electric apparatus.

Another embodiment of this application further provides an electric apparatus (not shown in the figure). The electric apparatus includes a body and a battery pack 100 accommodated within the body. The battery pack 100 is the battery pack 100 in any one of the foregoing some embodiments, so that the electric apparatus has all the beneficial effects of the battery pack 100, which are not repeated herein. Further, the electric apparatus may be an electric vehicle, electric bus, electric car, and the like. Accordingly, the body is a vehicle body structure, and the battery pack 100 is provided in the vehicle body to supply power. It should be understood that in other embodiments, the electric apparatus may alternatively be an energy storage device, electric bicycle, aviation device, or a handheld electric apparatus, such as a vacuum cleaner, a lawnmower, and other apparatuses.

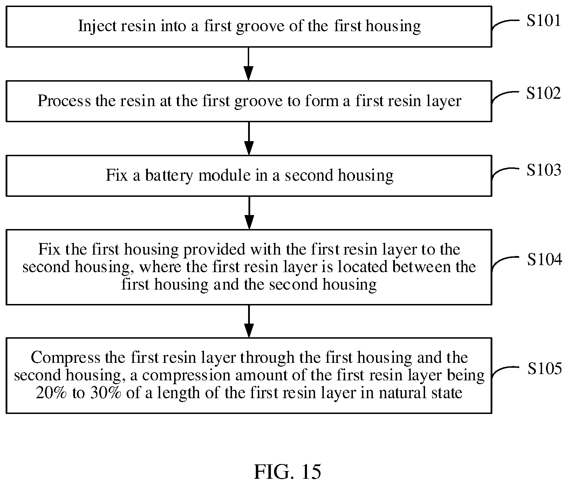

Referring to FIG. 13 and FIG. 15, another embodiment of this application further provides a method for assembling a battery pack, including the following steps:
S101: Inject resin into a first groove of the first housing.
S102: Process the resin at the first groove to form a first resin layer.
S103: Fix a battery module in a second housing.
S104: Fix the first housing provided with the first resin layer to the second housing, where the first resin layer is located between the first housing and the second housing.
S105: Compress the first resin layer through the first housing and the second housing, a compression amount of the first resin layer being 20% to 30% of a length of the first resin layer in natural state.

In step S101, a specific nozzle size, typically ranging from 0.5 mm to 1 mm, is used along with different glue viscosities and dispensing accuracies to apply the liquid silica gel to the first groove 111 of the first housing 10.

In step S102, the silicone gel applied in the first groove 111 is fixed and shaped into the first resin layer 40 by long-time baking at a temperature ranging from 100°C to 120°C.

In step S103, the battery module 60 is provided in the second housing 20 through mechanical assembly, and further, the battery module 60 may be provided in the second housing 20 by grasping with a robotic arm.

In step S104, the first housing 10 provided with the first resin layer 40 is fixed to the second housing 20, where the first resin layer 40 is located between the first housing 10 and the second housing 20. Further, the first housing 10 and the second housing 20 may be connected through fasteners.

In step S105, when the first resin layer 40 is provided between the first housing 10 and the second housing 20, and the first housing 10 and the second housing 20 are secured together using fasteners, the first resin layer 40 is compressed by the first housing 10 and the second housing 20, causing deformation of the first resin layer 40. The compression amount of the deformed first resin layer 40 is 20% to 30% of the length of the first resin layer 40 in natural state. Preferably, the compression amount of the first resin layer 40 is L mm, and the compression amount of the first resin layer 40 is compared using the same unit with the length of the first resin layer 40 in natural state.

It should be understood that when the battery pack 100 includes the third housing 30 and when the third housing 30 is fixed to the second housing 20, a second resin layer 50 is provided between the third housing 30 and the second housing 20.

Similar to the first resin layer 40, in step S101, the liquid silica gel is also applied to the third groove 311 of the third housing 30.

In step S102, the silicone gel applied in the third groove 311 is fixed and shaped into the second resin layer 50 by long-time baking at a temperature ranging from 100°C to 120°C.

In step S104, the third housing 30 provided with the second resin layer 50 is fixed to the second housing 20, where the second resin layer 50 is located between the third housing 30 and the second housing 20. Further, the third housing 30 and the second housing 20 may be connected through fasteners.

In step S105, when the second resin layer 50 is provided between the third housing 30 and the second housing 20, and the third housing 30 and the second housing 20 are secured together using fasteners, the second resin layer 50 is compressed by the third housing 30 and the second housing 20, causing deformation of the second resin layer 50. The compression amount of the deformed second resin layer 50 is 20% to 30% of the length of the second resin layer 50 in natural state. Preferably, the compression amount of the second resin layer 50 is L mm, and the compression amount of the second resin layer 50 is compared using the same unit with the length of the second resin layer 50 in natural state.

To sum up, in the battery pack, electric apparatus, and method for assembling the battery pack provided in some embodiments of this application, after the first resin layer 40 between the first housing 10 and the second housing 20 is compressed to 20% to 30% of its natural length, the first resin layer 40 is enabled to better seal the connection position between the first housing 10 and the second housing 20, effectively inhibiting impurities from entering the battery pack 100, and reducing the impact of impurities on the battery pack 100.

In addition, those of ordinary skill in the art should be aware of that the foregoing some embodiments are only intended to describe this application, but not to limit this application. Appropriate modifications and variations made to the foregoing some embodiments without departing from the essential spirit and scope of this application all fall within the scope of this application.

## Claims

1. A battery pack, comprising a battery module, a first housing, and a second housing; the first housing and the second housing forming an accommodating space for accommodating the battery module; wherein
the first housing comprises a first edge portion, the first edge portion is provided with a first groove, a first resin layer is provided in the first groove, and the first resin layer is adhesively fixed to an inner wall of the first groove;
the second housing comprises a second edge portion;
the first resin layer is provided between the first housing and the second housing and is connected to the second edge portion; and the first resin layer within the first groove is in a compressed state, with a compression amount of 20% to 30% of a length of the first resin layer in natural state.

2. The battery pack according to claim 1, wherein the first resin layer is in direct contact with the second edge portion.

3. The battery pack according to claim 1, wherein the first edge portion is provided with a second groove in communication with the first groove, the first resin layer is provided in the second groove, and the first resin layer is connected to an inner wall of the second groove.

4. The battery pack according to claim 3, wherein the first resin layer is in direct contact with the inner wall of the second groove.

5. The battery pack according to claim 3, wherein the first groove is closer to the battery module than the second groove.

6. The battery pack according to claim 5, wherein the first edge portion is provided with a first protrusion, the second groove is closer to the battery module than the first protrusion (114);
a first recess in communication with the second groove is provided between the first edge portion and the second edge portion, and the first protrusion is located at the first recess.

7. The battery pack according to claim 1, wherein the first resin layer is formed by providing and fixing a resin in the first groove.

8. The battery pack according to claim 1, wherein the second edge portion comprises a second surface connected to the first edge portion, wherein the second surface is a plane structure with a flatness of A, A being less than or equal to 0.3 mm.

9. The battery pack according to claim 5, wherein the battery module comprises a plurality of stacked battery cells, and the plurality of battery cells are stacked is a second direction; along a first direction, a thickness of the second edge portion is T; the first edge portion and the second edge portion are in fit connection along the second direction; along the second direction, a height of the second groove is Hi, wherein H₁ ranges from 0.2T to 0.25T; and the second direction is perpendicular to the first direction.

10. The battery pack according to claim 9, wherein along the first direction, a width of the second groove is Wi, and Wi ranges from 0.2T to 0.25T.

11. The battery pack according to claim 10, wherein the thickness T of the second edge portion ranges from 2.5 mm to 3 mm.

12. The battery pack according to claim 9, wherein the first housing is provided with a first hole; the first resin layer comprises a first part and a second part, the first part being connected to the second part;
when viewed along a third direction, the first part is closer to the battery module than the first hole; and the third direction is perpendicular to both the first direction and the second direction.

13. The battery pack according to claim 1, wherein a Shore hardness C of the first resin layer is 20° to 35°.

14. The battery pack according to claim 5, wherein the first housing comprises a first region connected to the first edge portion, wherein the first region is provided in the second housing;
and a second recess is provided between the first region and the second housing, the first groove being in communication with the second recess.

15. The battery pack according to claim 14, wherein the first resin layer is provided in the second recess.

16. The battery pack according to claim 1, wherein the compression amount is 20% to 21.4% of the length of the first resin layer in natural state.

17. The battery pack according to claim 1, wherein the compression amount is 21.4% to 25% of the length of the first resin layer in natural state.

18. The battery pack according to claim 1, wherein the compression amount is 25% to 27% of the length of the first resin layer in natural state.

19. The battery pack according to claim 1, wherein the compression amount is 27% to 30% of the length of the first resin layer in natural state.

20. An electric apparatus, comprising a body and a battery pack accommodated within the body, wherein the battery pack is the battery pack according to any one of claims 1 to 19.

21. A method for assembling the battery pack, comprising the following steps:
injecting a resin into the first groove of the first housing;
processing the resin at the first groove to form the first resin layer;
fixing the battery module in the second housing;
fixing the first housing provided with the first resin layer to the second housing, wherein the first resin layer is located between the first housing and the second housing; and
compressing the first resin layer through the first housing and the second housing, the compression amount of the first resin layer being 20% to 30% of the length of the first resin layer in natural state.
